# EUROPÄISCHE PATENTSCHRIFT

(11) **EP 3 595 451 B1**
(45) Veröffentlichungstag und Bekanntmachung des Hinweises auf die Patenterteilung: **15.09.2021**
(21) Anmeldenummer: 18709029.5
(22) Anmeldetag: 13.03.2018
(51) Int. Cl.: A21C 9/08, A21C 11/10, A21C 15/04, A23G 3/02, A23G 3/20

(54) **BEARBEITUNGSSTATION ZUR BILDUNG VON WAFFELFORMKÖRPERN MIT EINEM ROTIERENDEN SCHNEIDWERKZEUG**
MACHINING STATION FOR THE FORMATION OF WAFFLE FORM BODIES WITH A ROTATING CUTTING TOOL
STATION DE TRAITEMENT DESTINÉE À FORMER DES CORPS MOULÉS DE GAUFRE À L'AIDE D'UN OUTIL DE COUPE ROTATIF

(30) Priorität: 13.03.2017 EP 17160551
(43) Veröffentlichungstag der Anmeldung: 22.01.2020
(73) Patentinhaber: Haas Food Equipment GmbH, 2100 Leobendorf (AT)
(72) Erfinder: BUCZOLITS, Peter, 2000 Stockerau (AT); JIRASCHEK, Stefan, 2202 Königsbrunn (AT); ZWANZINGER, Gerhard, 2202 Königsbrunn (AT)
(74) Vertreter: Puchberger & Partner Patentanwälte
(86) Internationale Anmeldenummer: PCT/EP2018/056169
(87) Internationale Veröffentlichungsnummer: WO 2018/167018

(56) Entgegenhaltungen:
- EP-A1- 0 968 653
- DE-C- 117 327
- GB-A- 952 184
- US-A- 3 724 980
- US-A- 5 306 133

## Beschreibung

Die Erfindung betrifft eine Bearbeitungsstation gemäß den Merkmalen des Oberbegriffs des unabhängigen Patentanspruchs.

Insbesondere betrifft die Erfindung eine Bearbeitungsstation, in der als Hohlwaffenschalen ausgebildete Waffelformkörper von einem Backzusammenhang abgetrennt werden, um aus diesen Waffelformkörpern essbare Produkte zu bilden. Zur Bildung der Waffelformkörper wird in einem ersten Schritt in einer Backmaschine ein sogenannter Backzusammenhang gebacken. Dieser Backzusammenhang entspricht einem gebackenen Waffelblatt bzw. einem gebackenen Hohlwaffelblatt, das im Wesentlichen durch die Waffelformkörper und durch Verbindungsstege gebildet ist. Die Verbindungsstege verbinden die einzelnen Waffelformkörper des Backzusammenhangs miteinander. In der Regel ist der Backzusammenhang ein im Wesentlichen plattenförmiger Waffelkörper, bei dem die entlang einer Ebene angeordneten Verbindungsstege mehrere Waffelformkörper miteinander verbinden. Die Waffelformkörper stehen in der Regel von den Verbindungsstegen ab. Insbesondere weicht der Verlauf der Waffelformkörper vom Verlauf der Verbindungsstege ab. Durch Abtrennen der Verbindungsstege von den Waffelformkörpern werden einzelne Waffelformkörper gebildet. Diese Waffelformkörper können in weiterer Folge die Endprodukte sein. Gegebenenfalls werden die Waffelformkörper mit einer essbaren Creme gefüllt und/oder beschichtet und/oder von außen beschichtet, um Endprodukte zu bilden.

Gemäß Stand der Technik ist es bekannt, die Verbindungsstege durch Sägevorrichtungen oder Fräsvorrichtungen von den Waffelformkörpern abzutrennen. Nachteilig an bekannten Vorrichtungen und Verfahren ist, dass durch die spanabhebende Bearbeitung des Backzusammenhangs das abgetrennte Material in Form von Staub oder größeren Waffelteilen anfällt. Bisher wurde durch eine externe Absaugung neben den Schneidwerkzeugen eine Absaugung dieses Materials vorgenommen. Jedoch kann die Absaugung, die in der Nähe des Fräswerkzeugs angeordnet ist, nur dann ihren Zweck erfüllen, wenn eine verhältnismäßig hohe Saugleistung bereitgestellt wird. Bei einer derart hohen Saugleistung besteht jedoch die Gefahr, dass die Waffelformkörper selbst eingesaugt werden oder dass der Backzusammenhang beschädigt wird.

Herkömmliche Vorrichtungen sind unter anderem aus der DE 117 327 C, der EP 0 968 653 A1, der US 5 306 133 A, der US 3 724 980 A und der GB 952 184 A bekannt.

In der Praxis hat es sich als vorteilhaft herausgestellt, die Absaugung so nah wie möglich an den Bearbeitungsbereich heranzuführen.

Aufgabe der Erfindung ist es nun, die Nachteile des Standes der Technik zu überwinden und insbesondere eine Bearbeitungsstation zur Bildung von Waffelformkörpern durch Abtrennen der Verbindungsstege des Backzusammenhangs bereitzustellen, die einen effizienten Abtransport des abgetrennten Materials ermöglicht.

Die Erfindung ist in den Ansprüchen definiert. Die erfindungsgemäße Aufgabe wird durch die Merkmale des Anspruchs 1 gelöst. Die abhängigen Ansprüche beschreiben optionale Ausführungsformen der Erfindung.

Gegebenenfalls ist vorgesehen, dass das mindestens eine Schneidwerkzeug an der Absaugöffnung angebracht ist und insbesondere, dass das mindestens eine Schneidwerkzeug an der Innenseite der Absaugöffnung angebracht ist. Gegebenenfalls ist vorgesehen, dass das mindestens eine Schneidwerkzeug eine Spanfläche zum Abtransport des Materials aufweist, und dass die Spanfläche Richtung Absaugöffnung verläuft oder geneigt ist und/oder dass die Spanfläche zum Abtransport des Materials in die Absaugöffnung eingerichtet ist.

Gegebenenfalls ist vorgesehen, dass das Schneidwerkzeug als wechselbares Schneidwerkzeug ausgebildet ist, das über mindestens ein Befestigungselement lösbar mit dem Grundkörper verbunden ist, und dass gegebenenfalls ein Zentriermittel zur Lagezentrierung des Schneidwerkzeugs gegenüber dem Grundkörper vorgesehen ist. Gegebenenfalls ist vorgesehen, dass das Schneidwerkzeug die Mantelfläche des Grundkörpers in radialer Richtung überragt.

Gegebenenfalls ist vorgesehen, dass die Rotationsachse quer zur Förderrichtung und insbesondere normal zur Förderrichtung angeordnet ist.

Gegebenenfalls ist vorgesehen, dass an dem Grundkörper mehrere Schneidwerkzeuge und mehrere Absaugöffnungen vorgesehen sind.

Gegebenenfalls ist vorgesehen, dass der Grundkörper entlang der gesamten Breite des Haltebereichs mit einem Schneidwerkzeug oder mit mehreren Schneidwerkzeugen versehen ist.

Gegebenenfalls ist vorgesehen, dass mehrere Schneidwerkzeuge entlang ihrer zylindrischen Bewegungsfläche am Grundkörper hintereinander und/oder versetzt hintereinander angeordnet sind.

Gegebenenfalls ist vorgesehen, dass die Trennvorrichtung, insbesondere der drehbar angetriebene Grundkörper mit dem mindestens einen Schneidwerkzeug als Umfangsfräse oder Walzenfräse zur Zerspanung der Verbindungsstege wirkt, und dass die Fördervorrichtung zur Durchführung der Fräsvorschubbewegung eingerichtet ist. Gegebenenfalls ist vorgesehen, dass der Absaugkanal zur Abführung des Materials an einer axialen Stirnseite des Grundkörpers, insbesondere durch eine koaxial zur Rotationsachse verlaufende Hohlwelle oder Hohlachse, aus dem Grundkörper austritt. Gegebenenfalls ist vorgesehen, dass ein Sauggebläse vorgesehen ist, das an den Absaugkanal angeschlossen ist.

Gegebenenfalls ist vorgesehen, dass eine Schürze vorgesehen ist, durch die jene Absaugöffnungen zumindest teilweise verschlossen oder abgedeckt sind, die von der Haltevorrichtung weg weisen, abgewendet oder abgekehrt sind.

Gegebenenfalls ist vorgesehen, dass die Haltevorrichtung mehrere der Form des Backzusammenhangs angepasste Halteflächen zur Anlage der Waffelformkörper des Backzusammenhangs umfasst.

Gegebenenfalls ist vorgesehen, dass die Haltevorrichtung mehrere der Form des Backzusammenhangs angepasste Halteflächen zur Anlage der Waffelformkörper des Backzusammenhangs umfasst, dass mit einer Unterdruckquelle in Kontakt stehende Saugöffnungen zur Halterung der Waffelformkörper des Backzusammenhangs an der Haltevorrichtung vorgesehen sind, und/oder dass die Halteflächen zur beabstandeten Halterung der Verbindungsstege von der Haltevorrichtung ausgebildet sind.

Gegebenenfalls ist vorgesehen, dass die Haltevorrichtung als Saugplatte ausgebildet ist.

Gegebenenfalls ist vorgesehen, dass mehrere Haltevorrichtungen vorgesehen sind, dass die Fördervorrichtung als Endlosförderer ausgebildet ist, dass die Haltevorrichtungen aneinandergereiht entlang der Fördervorrichtung angeordnet sind, und/oder dass die Haltevorrichtungen von der Fördervorrichtung kontinuierlich durch die Trennvorrichtung bewegt werden oder bewegbar sind.

Gegebenenfalls ist vorgesehen, dass die Haltevorrichtungen von der Fördervorrichtung nacheinander insbesondere von einem Aufnahmebereich zur Aufnahme der Backzusammenhänge, durch die Trennvorrichtung und zu einem Entnahmebereich zur Entnahme der Waffelformkörper bewegt werden oder bewegbar sind.

In allen Ausführungsformen kann vorgesehen sein, dass der Backzusammenhang ein gebackenes Waffelblatt bzw. ein gebackenes Hohlwaffelblatt ist.
Bevorzugt ist vorgesehen, dass die Trennvorrichtung ortsfest, insbesondere am Maschinengestell angebracht ist.

Gegebenenfalls ist vorgesehen, dass mehrere Schneidwerkzeuge regelmäßig oder unregelmäßig verteilt am Grundkörper angeordnet sind. Insbesondere sind entlang eines Umfangkreises der Mantelfläche mehrere Schneidwerkzeuge, beispielsweise drei, vier, fünf, sechs oder mehr Schneidwerkzeuge angeordnet. Bevorzugt sind entlang der gesamten Breite oder zumindest entlang der gesamten Breite des Haltebereichs der Haltevorrichtung Schneidwerkzeuge angeordnet, sodass durch die Trennvorrichtung alle Verbindungsstege des Backzusammenhangs entfernt werden können. Bevorzugt ist vorgesehen, dass mehrere Schneidwerkzeuge entlang der Mantelfläche und insbesondere entlang der Bewegungsrichtung der Schneidwerkzeuge hintereinander und/oder versetzt hintereinander angeordnet sind.

Gegebenenfalls ist vorgesehen, dass das Schneidwerkzeug oder die Schneidwerkzeuge jeweils eine Spanfläche zum Abtransport des Materials aufweist oder aufweisen, wobei die Spanfläche bzw. die Spanflächen bevorzugt derart ausgestaltet sind, dass es durch die Rotation des Grundkörpers und des daran angeordneten Schneidwerkzeugs zu einem selbsttätigen Abtransport des Materials kommt. Insbesondere ist die Spanfläche derart ausgebildet, dass das abgetragene Material in die Absaugöffnung bzw. in den Absaugkanal transportiert wird. Bevorzugt ist vorgesehen, dass die Spanfläche Richtung Absaugöffnung verläuft oder geneigt ist, insbesondere dass die Spanfläche schaufelförmig oder flügelförmig ausgebildet ist und gegebenenfalls Richtung Absaugöffnung gekrümmt ist. Insbesondere ist vorgesehen, dass die Spanfläche derart ausgebildet ist, dass es durch die Rotation des Schneidwerkzeugs und/oder Grundkörpers zu einem Transport des Materials ins Innere des Grundkörpers kommt.

Die Schneidwerkzeuge weisen bevorzugt eine Schneide auf, die parallel oder schräg zur Rotationsachse und/oder normal oder schräg zur Schnittrichtung der Schneidwerkzeuge verläuft.

Bevorzugt ist die Trennvorrichtung derart ausgebildet, dass es zu einer Zerspanung der Verbindungsstege kommt. Insbesondere werden die Verbindungsstege zerkleinert und pulverförmig abtransportiert. Dieses Pulver kann wiederverwertet und insbesondere einer Backmasse zur Herstellung eines Backzusammenhangs beigemengt werden.

Das durch die Zerspanung der Verbindungsstege gebildete Pulver, das insbesondere auch als "Rework" bezeichnet wird, weist bevorzugt eine Teilchengröße von weniger als 2 mm auf. Bevorzugt weist ein Großteil der Teilchen des Pulvers eine Größe von etwa 100 bis 500 um auf. Die Größe entspricht insbesondere der durch eine Siebanalyse ermittelten Größe.

Gegebenenfalls sind an der Schneide des Schneidwerkzeugs Zähne vorgesehen. Gegebenenfalls ist die Absaugöffnung teilweise durch das Schneidwerkzeug gebildet.

Gegebenenfalls verläuft die Absaugöffnung schräg in den Grundkörper, wobei der Verlauf der Absaugöffnung insbesondere in Drehrichtung geneigt ist, sodass die Absaugöffnung derart ausgestaltet ist, dass das abgetrennte Material durch die Drehung des Grundkörpers in die Absaugöffnung transportiert wird.
Gegebenenfalls ist vorgehsehen, dass die Absaugöffnung nach innen, also Richtung Rotationsachse, keilförmig zusammenlaufend ausgebildet ist, sodass insbesondere eine Absaugdüse gebildet ist.

Erfindungsgemäß ist vorgesehen, dass die Absaugöffnung derart mit einem Absaugkanal und einem Absauggebläse verbunden ist, dass das entstehende Material durch die Absaugöffnung abgesaugt wird.

Bevorzugt ist in allen Ausführungsformen vorgesehen, dass das Material durch eine Kombination der Ausgestaltung der Spanfläche und der Absaugung abtransportiert wird.

Bevorzugt sind mehrere Schneidwerkzeuge und/oder mehrere Absaugöffnungen vorgesehen.

Gegebenenfalls ist vorgesehen, dass einige Absaugöffnungen, bzw. Absaugöffnungen in gewissen Bereichen, abgedeckt, teilweise abgedeckt, verschlossen und/oder teilweise verschlossen sind. Insbesondere kann vorgesehen sein, dass durch einen als Schürze wirkenden Körper jene Absaugöffnungen zumindest teilweise abgedeckt oder verschlossen sind, die von der Haltevorrichtung wegweisen. Dadurch wird die Saugleistung auf jene Absaugöffnungen konzentriert, die Richtung Haltevorrichtung weisen, wodurch die Effizienz der Absaugung verbessert werden kann.

Gegebenenfalls ist vorgesehen, dass der Absaugkanal einseitig, insbesondere an einer Stirnseite des Grundkörpers, aus dem Grundkörper austritt. Gegebenenfalls kann vorgesehen sein, dass der Absaugkanal als durchgehender Absaugkanal ausgebildet ist, der an einer Seite, insbesondere an einer Stirnseite des Grundkörpers, eintritt und an der anderen Seite, insbesondere an der anderen Stirnseite des Grundkörpers, wieder austritt. Dadurch kann eine kontinuierliche Absaugströmung entlang der Rotationsachse des Grundkörpers erzielt werden, durch den eine verbesserte Abführung des Materials erfolgen kann.

Gegebenenfalls ist vorgesehen, dass der Absaugkanal zumindest teilweise von einer Hohlwelle oder einer Hohlachse gebildet ist, die gleichzeitig als Welle oder als Achse zur Rotation des Grundkörpers wirkt.

Bevorzugt ist vorgesehen, dass die Haltevorrichtung derart ausgebildet ist, dass der Backzusammenhang an der Haltevorrichtung gehalten werden kann. Bevorzugt ist die Haltevorrichtung derart ausgebildet, dass die Verbindungsstege beabstandet von der Haltevorrichtung angeordnet sind. Durch das Vorsehen eines Spalts zwischen der Haltevorrichtung und den zu entfernenden Verbindungsstegen kann das Risiko einer Kollision des mindestens einen Schneidwerkzeugs mit der Haltevorrichtung reduziert werden.

Bevorzugt ist vorgesehen, dass die Haltevorrichtung als Saugplatte ausgebildet ist oder zumindest eine Saugplatte umfasst. Diese Saugplatte weist Öffnungen auf, die einseitig von einem oder mehreren Waffelformkörpern verschließbar sind. Durch Anlegen eines Unterdrucks werden die Waffelformkörper an diesen Öffnungen gehalten. Zu diesem Zweck kann vorgesehen sein, dass die Haltevorrichtung einen plattenförmigen Körper umfasst, der mit Durchgangsöffnungen versehen ist, wobei diese Durchgangsöffnungen einseitig von den Waffelformkörpern verschließbar oder verschlossen sind und wobei an die Durchgangsöffnungen von der anderen Seite eine Unterdruckquelle angeschlossen ist. Die Unterdruckquelle kann beispielsweise als einseitig auf die Haltevorrichtung wirkende Unterdruckglocke oder als Unterdruckraum ausgebildet sein.

Bevorzugt ist in allen Ausführungsformen vorgesehen, dass der auf der Haltevorrichtung angeordnete Backzusammenhang von der Fördervorrichtung kontinuierlich durch die Trennvorrichtung bewegt wird.

In allen Ausführungsformen kann vorgesehen sein, dass die Bearbeitungsstation eine Bearbeitungsstation einer Anlage zur industriellen Herstellung von Waffelprodukten ist. Insbesondere ist die Bearbeitungsstation inline in eine derartige Herstellungsanlage eingebunden. Die Backmaschinen zur Herstellung der Backzusammenhänge können beispielsweise Waffelbackautomaten wie Backzangenautomaten oder ähnliche Waffelbackmaschinen sein, bei denen eine kontinuierliche Herstellung von Waffeln bzw. von Backzusammenhängen erfolgt. Insbesondere ist die erfindungsgemäße Bearbeitungsstation mit einer Backmaschine synchronisiert, sodass die von einer Backmaschine ausgegebenen Backzusammenhänge direkt an die Bearbeitungsstation übergeben werden können, um eine weitere Bearbeitung zu ermöglichen. Gegebenenfalls ist zwischen der Backmaschine und der erfindungsgemäßen Bearbeitungsstation eine Kühlvorrichtung oder eine Puffervorrichtung zur Kühlung oder Pufferung der Waffelblätter vorgesehen.

In allen Ausführungsformen kann vorgesehen sein, dass die Waffelformkörper an der Haltevorrichtung durch eine Haltekraft gehalten werden. Insbesondere werden die Waffelformkörper von dem Aufnahmebereich durch die Trennvorrichtung bis zum oder knapp vordem Entnahmebereich gehalten.

In allen Ausführungsformen ist bevorzugt vorgesehen, dass der Backzusammenhang ein unter Druck ausgebackener knusprig-spröder Waffelkörper und insbesondere ein Hohlwaffelblatt ist.

Die Erfindung wird nun anhand von exemplarischen Figuren weiter beschrieben.

Figur 1 zeigt eine schematische Schrägansicht von maßgeblichen Komponenten der Bearbeitungsstation, Figur 2 zeigt eine schematische Schnittdarstellung von maßgeblichen Komponenten der Bearbeitungsstation im Bereich der Trennvorrichtung.

Figur 3 zeigt eine schematische Schrägansicht einer möglichen Ausgestaltungsform eines Grundkörpers mit mehreren Absaugöffnungen und Schneidwerkzeugen.

Wenn nicht anders angegeben, so entsprechen die Bezugszeichen folgenden Komponenten: Waffelformkörper 1, Verbindungssteg 2, Backzusammenhang 3, Trennvorrichtung 4, Haltevorrichtung 5, Haltebereich 6, Fördervorrichtung 7, Grundkörper 8, Rotationsachse (des Grundkörpers) 9, Mantelfläche (des Grundkörpers) 10, Schneidwerkzeug 11, Absaugöffnung 12, abgetrenntes Material 13, Absaugkanal 14, Spanfläche 15, Befestigungselement 16, Zentriermittel 17, Förderrichtung (der Haltevorrichtung) 18, Breite (des Haltebereichs) 19, axiale Stirnseite (des Grundkörpers) 20, Sauggebläse 21, Schürze 22, Haltefläche 23, Unterdruckquelle 24, Saugöffnung 25, Aufnahmebereich 26, Entnahmebereich 27, Unterdruckraum 28.

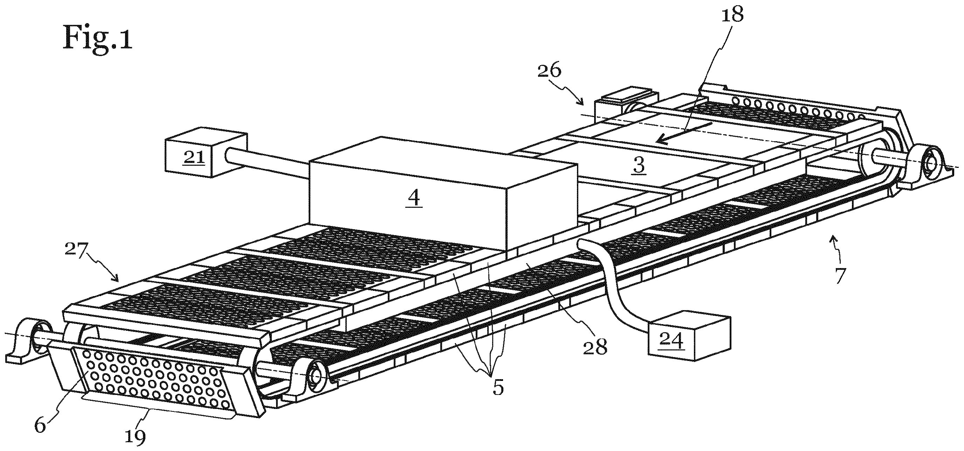

Figur 1 zeigt eine schematische Schrägansicht von maßgeblichen Komponenten einer erfindungsgemäßen Bearbeitungsstation. Die Bearbeitungsstation umfasst eine Fördervorrichtung 7, entlang derer mehrere Haltevorrichtungen 5 angeordnet sind. Die Fördervorrichtung 7 kann beispielsweise, wie in dieser Ausführungsform, als Endlosförderer ausgebildet sein, wobei die Fördervorrichtung 7 eine kontinuierliche Bewegung mehrerer Haltevorrichtungen 5 ermöglicht. Auf die Haltevorrichtungen 5 können im Aufnahmebereich 26 Backzusammenhänge 3 platziert werden. Die nicht dargestellte Übergabe auf die Haltevorrichtungen 5 geschieht über herkömmliche Mittel wie beispielsweise Übergabeflächen, Übergabebänder, Greifer oder ähnliche Vorrichtungen. Der Backzusammenhang 3 wird jeweils auf einen Haltebereich 6 einer Haltevorrichtung 5 platziert. Von dem Aufnahmebereich 26 wird der Backzusammenhang 3 entlang der Förderrichtung 18 zu und durch eine Trennvorrichtung 4 befördert. Erfindungsgemäß ist an die Trennvorrichtung 4 ein Sauggebläse 21 zur Absaugung des in der Trennvorrichtung 4 abgetrennten Materials angeschlossen.

Zusätzlich ist eine Unterdruckquelle 24 vorgesehen, durch die der Backzusammenhang 3 an der Haltevorrichtung 5 gehalten wird. Insbesondere sind die Haltevorrichtungen 5 jeweils als Saugplatten ausgebildet. Diese Saugplatten können als Durchgangsöffnungen ausgebildete Saugöffnungen 25 umfassen, die einseitig von dem Backzusammenhang 3 verschlossen sind. Auf der anderen Seite der Durchgangsöffnungen ist die Unterdruckquelle 24 angeschlossen. Die Verbindung kann beispielsweise durch einen Richtung Saugöffnungen 25 geöffneten Unterdruckraum 28 gebildet sein. Die Unterdruckquelle 24 steht mit den Saugöffnungen 25 der Haltevorrichtung 5 in Kontakt, um einen Waffelkörper und/oder den Backzusammenhang an der Haltevorrichtung 5 durch Unterdruckkräfte zu halten.

In der Trennvorrichtung 4 werden die Verbindungsstege 2 von den Waffelformkörpern 1 getrennt. Die Waffelformkörper 1 verbleiben bei der vorliegenden Ausführungsform an der Haltevorrichtung 5 und werden zu einem Entnahmebereich 27 gefördert und in diesem Entnahmebereich 27 abgenommen. Die Entnahme der von den Verbindungsstegen 2 befreiten Waffelformkörper 1 kann beispielsweise über herkömmliche Vorrichtungen wie beispielsweise über Saugelemente, Abführbänder oder Abführrutschen erfolgen.

Die in Figur 1 dargestellte Ausführungsform kann beispielsweise auf einem Maschinengestell angeordnet sein, wobei die Verbindung mit dem Maschinengestell über die Lagerböcke der Umlenkrollen der Fördervorrichtung 7 geschehen kann.

Die Haltevorrichtungen 5 sind in der vorliegenden Ausführungsform jeweils zweiteilig ausgebildet. Durch die Teilung, deren Teilungslinie quer zur Förderrichtung 18 verläuft, weisen die Segmente der Haltevorrichtung 5 eine kleinere Erstreckung entlang der Förderrichtung 18 auf. Dadurch können die Haltevorrichtungen 5 der Fördervorrichtung 7 um einen kleineren Umlenkradius umgelenkt werden. Die Fördervorrichtung 7 umfasst beispielsweise einen Riemen oder eine Kette, an der die Haltevorrichtung 5 bzw. deren Segmente angeordnet sind. Dieser Riemen oder diese Kette der Fördervorrichtung 7 kann in allen Ausführungsformen von einem Antrieb, beispielsweise von einem Drehantrieb, angetrieben sein.

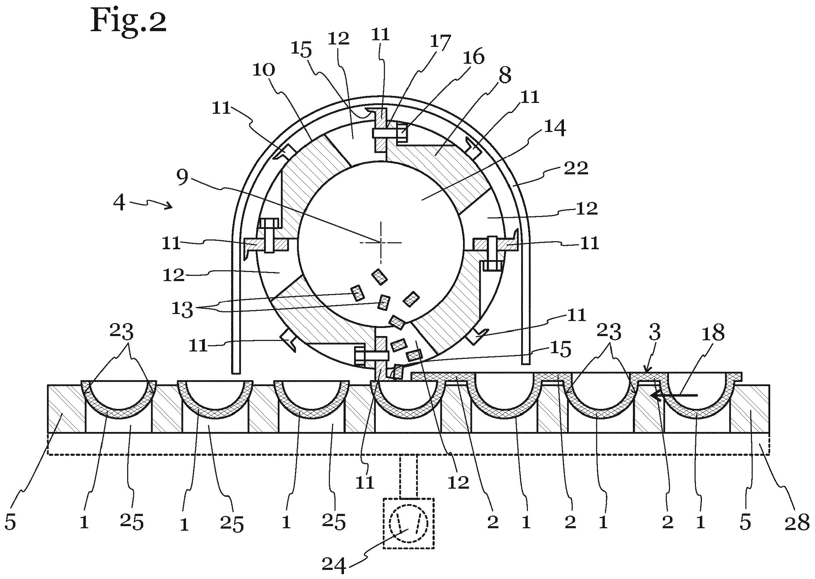

Figur 2 zeigt eine schematische Schnittdarstellung von maßgeblichen Komponenten der Trennvorrichtung 4. Ein Backzusammenhang 3, der mehrere Waffelformkörper 1 und mehrere Verbindungsstege 2 umfasst, wird entlang der Förderrichtung 18 durch die Trennvorrichtung 4 gefördert. Die Halterung des Backzusammenhangs 3 und insbesondere der Waffelformkörper 1 geschieht über eine Haltevorrichtung 5. Diese Haltevorrichtung 5 ist in der vorliegenden Ausführungsform als Saugplatte ausgebildet und umfasst mehrere Saugöffnungen 25, an die eine Unterdruckquelle 24 angeschlossen ist. Die Unterdruckquelle 24 wirkt beispielsweise über eine von unten in die Saugöffnungen angeschlossenen Unterdruckraum 28. Die Haltevorrichtung 5 umfasst in der vorliegenden Ausführungsform mehrere der Form des Backzusammenhangs angepasste Halteflächen 23 zur Anlage der Waffelformkörper (1) des Backzusammenhangs (3). Durch die Ausgestaltung der Halteflächen 23 bzw. der Saugöffnungen 25 können die Saugöffnungen 25 durch die Waffelformkörper 1 verschlossen oder abgedeckt werden, sodass eine Haltekraft durch den Unterdruck erzeugt werden kann. Die Haltevorrichtung 5 und insbesondere die Halteflächen 23 sind bevorzugt derart ausgebildet, dass die Verbindungsstege 2 beabstandet zur Haltevorrichtung 5 an der Haltevorrichtung 5 gehalten werden. Durch die spezielle Halterung ist zwischen den Verbindungsstegen 2 und der Haltevorrichtung 5 ein Spalt vorgesehen. Dieser Spalt ist beispielsweise 0,5mm bis 3mm hoch und ermöglicht eine beabstandete Bewegung der Schneidwerkzeuge 11 von den Haltevorrichtungen 5.

Zur Abtrennung der Verbindungsstege 2 sind Schneidwerkzeuge 11 vorgesehen. Die Schneidwerkzeuge 11 sind in der vorliegenden Ausführungsform an einem Grundkörper 8 angeordnet. Der Grundkörper 8 ist zylindrisch ausgebildet und weist eine Rotationsachse 9 auf, die einerseits die Rotationsachse 9 des zylindrischen Grundkörpers 8 und andererseits die Rotationsachse 9 für eine Drehung des Grundkörpers 8 ist. Insbesondere wird der Grundkörper 8 um die Rotationsachse 9 durch einen herkömmlichen Drehantrieb rotiert. Dadurch wirkt der Grundkörper 8 mit den Schneidwerkzeugen 11 als Fräse - in der vorliegenden Ausführungsform insbesondere als Gegenlauffräse, bei der die Schneidwerkzeuge 11 gegen die Förderrichtung 18 wirken.

In allen Ausführungsformen kann ein als Fräse wirkender oder ausgebildeter Grundkörper alternativ als Gleichlauffräse wirken, bei der die Schneidwerkzeuge 11 in Förderrichtung 18 wirken. Beim Gleichlauffräsen wird in der Regel eine kleinere Haltekraft benötigt, da die Waffelformkörper nicht oder weniger stark aus der Haltevorrichtung 5 gezogen werden.

Im Bereich der Schneidwerkzeuge 11 sind Absaugöffnungen 12 vorgesehen. An die Absaugöffnungen 12 schließt ein Absaugkanal 14 an. Der Absaugkanal 14 ist in der vorliegenden Ausführungsform im Innenraum des Grundkörpers 8 angeordnet. Insbesondere ist der Grundkörper 8 als Hohlzylinder ausgebildet, dessen Innenraum den Absaugkanal 14 bildet. In bevorzugter Weise sind die Schneidwerkzeuge 11 an den Absaugöffnungen 12 angeordnet. Zur Befestigung der Schneidwerkzeuge 11 an den Absaugöffnungen 12 sind Befestigungselemente 16 vorgesehen. Zur Lagezentrierung der Schneidwerkzeuge 11 gegenüber dem Grundkörper 8 sind bevorzugt Zentriermittel 17 vorgesehen, die als herkömmliche Zentriermittel 17, wie beispielsweise als Passschrauben, ausgebildet sein können.

Die Schneidwerkzeuge 11 der Fig.1 überragen die Mantelfläche 10 des Grundkörpers 8 in radialer Richtung.

Durch die vorliegende Konfiguration wirkt die Trennvorrichtung 4, insbesondere der Grundkörper 8 mit seinen Schneidwerkzeugen 11, als Fräse. Das abgetrennte Material 13 wird durch die Absaugöffnung 12 in den Absaugkanal 14 gesaugt und daraufhin abtransportiert. Bevorzugt sind die Schneidwerkzeuge 11 mit jeweils einer Spanfläche 15 versehen. Diese Spanfläche 15 ist bevorzugt derart ausgestaltet, dass durch die Bewegung des Grundkörpers 8 bzw. durch die Bewegung des Schneidwerkzeugs 11 ein Transport des Materials 13 Richtung oder in die Absaugöffnung 12 erfolgt. Dazu ist die Spanfläche 15 bevorzugt geneigt oder gekrümmt ausgeführt. Bevorzugt ist die Spanfläche 15 Richtung Absaugöffnung 12 geneigt oder gekrümmt ausgeführt. Durch eine Kombination der speziellen Ausgestaltung der Spanfläche 15 und der Absaugung durch die Absaugöffnung 12 kann ein verbesserter Abtransport des Materials 13 erfolgen.

In der vorliegenden Ausführungsform ist eine Schürze 22 vorgesehen. Durch diese Schürze 22 sind manche bzw. einige Absaugöffnungen 12 zumindest teilweise verschlossen und/oder abgedeckt. Insbesondere sind jene Absaugöffnungen 12 abgedeckt, die von der Haltevorrichtung 5 wegweisen. Dadurch wird die Absaugleistung auf jene Absaugöffnungen 12 fokussiert, die abgetrenntes Material 13 absaugen sollen. Insbesondere ist die Absaugleistung auf die Absaugöffnungen 12 jenes Schneidwerkzeugs 11 fokussiert, das gerade im Eingriff mit dem Backzusammenhang 3 steht oder kurz vorher gestanden ist.

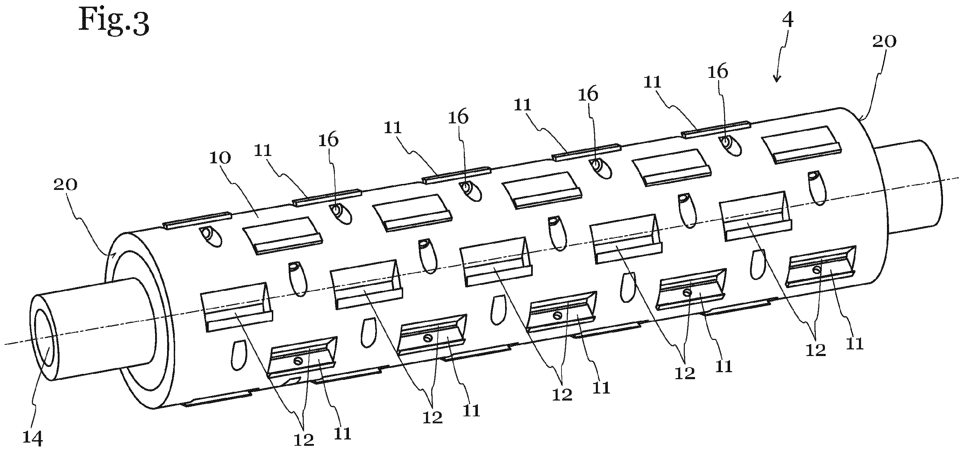

Figur 3 zeigt eine Schrägansicht maßgeblicher Komponenten der Trennvorrichtung 4. An dem Grundkörper 8 sind mehrere Schneidwerkzeuge 11 sowie mehrere Absaugöffnungen 12 vorgesehen. Wie in den vorangegangenen Figuren ist der Grundkörper 8 als zylindrischer Körper ausgebildet. Der Grundkörper 8 kann beidseitig, beispielsweise durch auskragende Wellen oder Achsen, gelagert sein. Der Grundkörper 8 weist in der vorliegenden Ausführungsform zwei axiale Stirnseiten 20 auf, wobei durch zumindest eine axiale Stirnseite 20 der Absaugkanal 14 austritt. Gegebenenfalls ist die gegenüberliegende axiale Stirnseite 20 verschlossen, sodass eine einseitige Absaugung erfolgt. Alternativ können jedoch an beiden axialen Stirnseiten 20 des Grundkörpers 8 Öffnungen vorgesehen sein, sodass es zu einer Querspülung des Grundkörpers 8 zum Abtransport des abgetrennten Materials 13 kommen kann. Die Schneidwerkzeuge 11 überragen die Mantelfläche 10 des Grundkörpers 8. Ferner sind die Schneidwerkzeuge 11 bevorzugt in allen Ausführungsformen als wechselbare Schneidwerkzeuge ausgebildet, die über ein oder mehrere Befestigungselemente 16 am Grundkörper 8 befestigt sind.

Bevorzugt ist durch die Darstellungen der Figur 1, Figur 2 und Figur 3 eine einzige Ausführungsform der Erfindung beschrieben.

## Patentansprüche

1. Bearbeitungsstation zur Bildung von Waffelformkörpern (1) durch Abtrennen von Verbindungsstegen (2) von einem aus den Waffelformkörpern (1) und den Verbindungsstegen (2) zusammengesetzten Backzusammenhang (3), umfassend:
- eine Trennvorrichtung (4) zum Abtrennen der Verbindungsstege (2) des Backzusammenhangs (3),
- mindestens eine Haltevorrichtung (5) zur Halterung des Backzusammenhangs (3) und der Waffelformkörper (1) des Backzusammenhangs (3) in einem Haltebereich (6) der Haltevorrichtung (5),
- und eine Fördervorrichtung (7), die zur kontinuierlichen Förderung der Haltevorrichtung (5) durch die Trennvorrichtung (4) entlang einer Förderrichtung (18) eingerichtet ist,
- wobei die Trennvorrichtung (4) einen zylindrisch ausgebildeten Grundkörper (8) aufweist, der um seine Rotationsachse (9) drehbar angetriebenen ist,
- und wobei der Grundkörper (8) an seiner Mantelfläche (10) mit mindestens einem Schneidwerkzeug (11) zum Abtrennen mindestens eines Verbindungsstegs (2) versehen ist,
- **dadurch gekennzeichnet, dass** in der Mantelfläche (10) des Grundkörpers (8) mindestens eine Absaugöffnung (12) zur Absaugung des beim Abtrennen der Verbindungsstege (2) abgetrennten Materials (13) vorgesehen ist,
- wobei an die Absaugöffnung (12) von innen ein Absaugkanal (14) anschließt,
- wobei der Absaugkanal (14) im Inneren des Grundkörpers (8) verläuft,
- wobei der Absaugkanal (14) durch die Absaugöffnung (12) aus dem Grundkörper (8) austritt,
- wobei an den Absaugkanal (14) ein Sauggebläse (21) zur Absaugung des in der Trennvorrichtung (4) abgetrennten Materials angeschlossen ist,
- und wobei die Absaugöffnung (12) derart mit dem Absaugkanal (14) und dem Sauggebläse (21) verbunden ist, dass das entstehende Material durch die Absaugöffnung (12) in den Absaugkanal (14) abgesaugt und daraufhin abtransportiert werden kann.

2. Bearbeitungsstation nach Anspruch 1, **dadurch gekennzeichnet, dass** das mindestens eine Schneidwerkzeug (11) an der Absaugöffnung (12) angebracht ist und insbesondere, dass das mindestens eine Schneidwerkzeug (11) an der Innenseite der Absaugöffnung (12) angebracht ist.

3. Bearbeitungsstation nach Anspruch 1 oder 2, **dadurch gekennzeichnet, dass** das mindestens eine Schneidwerkzeug (11) eine Spanfläche (15) zum Abtransport des Materials aufweist, und dass die Spanfläche (15) Richtung Absaugöffnung (12) verläuft oder geneigt ist und/oder dass die Spanfläche (15) zum Abtransport des Materials in die Absaugöffnung (12) eingerichtet ist.

4. Bearbeitungsstation nach einem der Ansprüche 1 bis 3, **dadurch gekennzeichnet, dass** das Schneidwerkzeug (11) als wechselbares Schneidwerkzeug (11) ausgebildet ist, das über mindestens ein Befestigungselement (16) lösbar mit dem Grundkörper (8) verbunden ist, und dass gegebenenfalls ein Zentriermittel (17) zur Lagezentrierung des Schneidwerkzeugs (11) gegenüber dem Grundkörper (8) vorgesehen ist.

5. Bearbeitungsstation nach einem der Ansprüche 1 bis 4, **dadurch gekennzeichnet, dass** die Rotationsachse (9) quer zur Förderrichtung (18) und insbesondere normal zur Förderrichtung (18) angeordnet ist.

6. Bearbeitungsstation nach einem der Ansprüche 1 bis 5, **dadurch gekennzeichnet, dass** an dem Grundkörper (8) mehrere Schneidwerkzeuge (11) und mehrere Absaugöffnungen (12) vorgesehen sind.

7. Bearbeitungsstation nach einem der Ansprüche 1 bis 6, **dadurch gekennzeichnet, dass** der Grundkörper (8) entlang der gesamten Breite (19) des Haltebereichs (6) mit einem Schneidwerkzeug (11) oder mit mehreren Schneidwerkzeugen (11) versehen ist.

8. Bearbeitungsstation nach einem der Ansprüche 1 bis 7, **dadurch gekennzeichnet, dass** mehrere Schneidwerkzeuge (11) entlang ihrer zylindrischen Bewegungsfläche am Grundkörper (8) hintereinander und/oder versetzt hintereinander angeordnet sind.

9. Bearbeitungsstation nach einem der Ansprüche 1 bis 8, **dadurch gekennzeichnet, dass** die Trennvorrichtung (4), insbesondere der drehbar angetriebene Grundkörper (8) mit dem mindestens einen Schneidwerkzeug (11) als Umfangsfräse oder Walzenfräse zur Zerspanung der Verbindungsstege (2) wirkt, und dass die Fördervorrichtung (7) zur Durchführung der Fräsvorschubbewegung eingerichtet ist.

10. Bearbeitungsstation nach einem der Ansprüche 1 bis 9, **dadurch gekennzeichnet, dass** der Absaugkanal (14) zur Abführung des Materials an einer axialen Stirnseite (20) des Grundkörpers (8), insbesondere durch eine koaxial zur Rotationsachse verlaufende Hohlwelle oder Hohlachse, aus dem Grundkörper (8) austritt.

11. Bearbeitungsstation nach einem der Ansprüche 1 bis 10, **dadurch gekennzeichnet, dass** die Haltevorrichtung (5) mehrere der Form des Backzusammenhangs (3) angepasste Halteflächen (23) zur Anlage der Waffelformkörper (1) des Backzusammenhangs (3) umfasst.

12. Bearbeitungsstation nach einem der Ansprüche 1 bis 11, **dadurch gekennzeichnet,**
- **dass** die Haltevorrichtung (5) mehrere der Form des Backzusammenhangs (3) angepasste Halteflächen (23) zur Anlage der Waffelformkörper (1) des Backzusammenhangs (3) umfasst,
- **dass** mit einer Unterdruckquelle (24) in Kontakt stehende Saugöffnungen (25) zur Halterung der Waffelformkörper (1) des Backzusammenhangs (3) an der Haltevorrichtung (5) vorgesehen sind,
- und **dass** die Halteflächen (23) zur beabstandeten Halterung der Verbindungsstege (2) von der Haltevorrichtung (5) ausgebildet sind.

13. Bearbeitungsstation nach einem der Ansprüche 1 bis 12, **dadurch gekennzeichnet, dass** die Haltevorrichtung (5) als Saugplatte ausgebildet ist.

14. Bearbeitungsstation nach einem der Ansprüche 1 bis 13, **dadurch gekennzeichnet,**
- **dass** mehrere Haltevorrichtungen (5) vorgesehen sind,
- **dass** die Fördervorrichtung (7) als Endlosförderer ausgebildet ist,
- **dass** die Haltevorrichtungen (5) aneinandergereiht entlang der Fördervorrichtung (7) angeordnet sind,
- und **dass** die Haltevorrichtungen (5) von der Fördervorrichtung (7) kontinuierlich durch die Trennvorrichtung (4) bewegt werden oder bewegbar sind,
- wobei die Haltevorrichtungen (5) von der Fördervorrichtung (7) nacheinander insbesondere von einem Aufnahmebereich (26) zur Aufnahme der Backzusammenhänge (3), durch die Trennvorrichtung (4) und zu einem Entnahmebereich (27) zur Entnahme der Waffelformkörper (1) bewegt werden oder bewegbar sind.

## Claims

1. A processing station for forming shaped wafer bodies (1) by separating connecting bars (2) from a bakery product connection (3), which is composed of the shaped wafer bodies (1) and the connecting bars (2), comprising:
- a separating device (4) for cutting off the connecting bars (2) of the bakery product connection (3),
- at least one holding device (5) for holding the bakery product connection (3) and the shaped wafer bodies (1) of the bakery product connection (3) in a holding region (6) of the holding device (5),
- and a conveying device (7), which is arranged for continuously conveying the holding device (5) through the separating device (4) along a conveying direction (18),
- wherein the separating device (4) has a cylindrically formed base body (8), which is driven rotatably about its axis of rotation (9), and
- wherein, on its circumferential surface (10), the base body (8) is provided with at least one cutting tool (11) for cutting off at least one connecting bar (2),
**characterized in that**
- at least one suction opening (12) is provided in the circumferential surface (10) of the base body (8) for suctioning off the material (13) cut off during the cutting off of the connecting bars (2),
- wherein a suction channel (14) is connected to the suction opening (12) from the inside,
- wherein the suction channel (14) extends in the interior of the base body (8),
- wherein the suction channel (14) emerges from the base body (8) through the suction opening (12),
- wherein a suction fan (21) is connected to the suction channel (14) for suctioning off the material cut off in the separating device (4),
- and wherein the suction opening (12) is connected to the suction channel (14) and the suction fan (21) in such a way that the resulting material can be suctioned off through the suction opening (12) into the suction channel (14) and then transported away.

2. The processing station according to claim 1, **characterized in that** the at least one cutting tool (11) is attached to the suction opening (12) and in particular **in that** the at least one cutting tool (11) is attached to the inside of the suction opening (12).

3. The processing station according to claim 1 or 2, **characterized in that** the at least one cutting tool (11) has a rake face (15) for transporting the material away, and **in that** the rake face (15) extends or is inclined towards the suction opening (12) and/or **in that** the rake face (15) is configured to transport the material into the suction opening (12).

4. The processing station according to one of claims 1 to 3, **characterized in that** the cutting tool (11) is designed as an exchangeable cutting tool (11), which is detachably connected to the base body (8) via at least one fastening element (16), and **in that**, optionally, a centring means (17) is provided for centring the position of the cutting tool (11) relative to the base body (8).

5. The processing station according to one of claims 1 to 4, **characterized in that** the axis of rotation (9) is arranged transversely to the conveying direction (18) and in particular normal to the conveying direction (18).

6. The processing station according to one of claims 1 to 5, **characterized in that** a plurality of cutting tools (11) and a plurality of suction openings (12) are provided on the base body (8).

7. The processing station according to one of claims 1 to 6, **characterized in that** the base body (8) is provided with one cutting tool (11) or with a plurality of cutting tools (11) along the entire width (19) of the holding region (6).

8. The processing station according to one of claims 1 to 7, **characterized in that** a plurality of cutting tools (11) is arranged on the base body (8) one after the other and/or arranged offset one after the other along their cylindrical movement surface.

9. The processing station according to one of claims 1 to 8, **characterized in that** the separating device (4), in particular the rotatably driven base body (8) with the at least one cutting tool (11) acts as a circumferential milling cutter or roller milling cutter for cutting the connecting bars (2), and **in that** the conveying device (7) is configured to carry out the milling feed movement.

10. The processing station according to one of claims 1 to 9, **characterized in that** the suction channel (14) for discharging the material emerges from the base body (8) at an axial end face (20) of the base body (8), in particular through a hollow shaft or hollow axis extending coaxially with the axis of rotation.

11. The processing station according to one of claims 1 to 10, **characterized in that** the holding device (5) comprises a plurality of holding surfaces (23), which are adapted to the shape of the bakery product connection (3), for bearing the shaped wafer bodies (1) of the bakery product connection (3).

12. The processing station according to one of claims 1 to 11, **characterized**
- **in that** the holding device (5) comprises a plurality of holding surfaces (23), which are adapted to the shape of the bakery product connection (3), for bearing the shaped wafer bodies (1) of the bakery product connection (3),
- **in that** suction openings (25), which are in contact with a negative pressure source (24), are provided for holding the shaped wafer bodies (1) of the bakery product connection (3) on the holding device (5),
- and **in that** the holding surfaces (23) are designed for holding the connecting bars (2) at a distance from the holding device (5).

13. The processing station according to one of claims 1 to 12, **characterized in that** the holding device (5) is designed as a suction plate.

14. The processing station according to one of claims 1 to 13, **characterized**
- **in that** a plurality of holding devices (5) is provided,
- **in that** the conveying device (7) is designed as an endless conveyor,
- **in that** the holding devices (5) are arranged in a row along the conveyor device (7),
- and **in that** the holding devices (5) are moved or can be moved continuously by the conveying device (7) through the separating device (4),
- wherein the holding devices (5) are moved or can be moved by the conveying device (7) one after the other, in particular from a receiving region (26) for receiving the bakery product connections (3), through the separating device (4) and to a removal region (27) for removing the shaped wafer bodies (1).

## Revendications

1. Une poste de traitement pour la formation de pièces moulées de gaufrette (1) par la séparation de barrettes de liaison (2) d'une interconnexion de cuisson (3) composée des pièces moulées de gaufrette (1) et des barrettes de liaison (2), comprenant:
- un dispositif de séparation (4) pour détacher les barrettes de liaison (2) de l'interconnexion de cuisson (3),
- au moins un support (5) pour maintenir l'interconnexion de cuisson (3) et les pièces moulées de gaufrette (1) de l'interconnexion de cuisson (3) dans une zone de retenue (6) du support (5),
- et un dispositif de transport (7) configuré pour le transport continu du support (5) à travers le dispositif de séparation (4) le long d'une direction de transport (18),
- dans laquelle le dispositif de séparation (4) présente un corps de base (8) cylindrique, qui est entraîné en rotation autour de son axe de rotation (9), et
- dans laquelle le corps de base (8) est pourvu d'au moins un outil de coupe (11) sur sa surface externe (10) pour détacher au moins une barrette de liaison (2),
**caractérisée en ce que**
- au moins un orifice d'aspiration (12) est pourvu dans la surface externe (10) du corps de base (8) pour aspirer la matière (13) qui est détachée lors du détachement des barrettes de liaison (2),
- dans laquelle un canal d'aspiration (14) est raccordé à l'orifice d'aspiration (12) de l'intérieur,
- dans laquelle le canal d'aspiration (14) s'étend à l'intérieur du corps de base (8),
- dans laquelle le canal d'aspiration (14) sort du corps de base (8) par l'orifice d'aspiration (12),
- dans laquelle un ventilateur d'aspiration (21) est relié au canal d'aspiration (14) pour aspirer la matière détachée dans le dispositif de séparation (4),
- et dans laquelle l'orifice d'aspiration (12) est relié au canal d'aspiration (14) et au ventilateur d'aspiration (21) de telle sorte que la matière obtenue peut être aspirée à travers l'orifice d'aspiration (12) dans le canal d'aspiration (14) et ensuite évacuée.

2. La poste de traitement selon la revendication 1, **caractérisée en ce que** le au moins un outil de coupe (11) est monté sur l'orifice d'aspiration (12) et en particulier **en ce que** le au moins un outil de coupe (11) est monté sur la face intérieure de l'orifice d'aspiration (12).

3. La poste de traitement selon la revendication 1 ou 2, **caractérisée en ce que** le au moins un outil de coupe (11) présente une face de coupe (15) pour l'évacuation de la matière, et **en ce que** la face de coupe (15) s'étend ou est inclinée vers l'orifice d'aspiration (12) et/ou en ce que la face de coupe (15) est configurée pour l'évacuation de la matière dans l'orifice d'aspiration (12).

4. La poste de traitement selon l'une des revendications 1 à 3, **caractérisée en ce que** l'outil de coupe (11) est réalisée comme outil de coupe (11) échangeable qui est relié de manière amovible au corps de base (8) par au moins un élément de fixation (16), et **en ce qu'**un moyen de centrage (17) pour centrer la position de l'outil de coupe (11) vis-à-vis du corps de base (8) est prévu, le cas échéant.

5. La poste de traitement selon l'une des revendications 1 à 4, **caractérisée en ce que** l'axe de rotation (9) est disposé transversalement à la direction de transport (18) et en particulier perpendiculairement à la direction de transport (18).

6. La poste de traitement selon l'une des revendications 1 à 5, **caractérisée en ce que** plusieurs outils de coupe (11) et plusieurs orifices d'aspiration (12) sont prévus sur le corps de base (8).

7. La poste de traitement selon l'une des revendications 1 à 6, **caractérisée en ce que** le corps de base (8) est pourvu d'un outil de coupe (11) ou de plusieurs outils de coupe (11) sur toute la largeur (19) de la zone de retenue (6).

8. La poste de traitement selon l'une des revendications 1 à 7, **caractérisée en ce que** plusieurs outils de coupe (11) sont disposés en série et/ou en série mutuellement décalés sur le corps de base (8) le long de leur face de mouvement cylindrique.

9. La poste de traitement selon l'une des revendications 1 à 8, **caractérisée en ce que** le dispositif de séparation (4), en particulier le corps de base (8) entraîné en rotation avec le au moins un outil de coupe (11) agit comme fraise circulaire ou fraise cylindrique pour usiner les barrettes de liaison (2), et **en ce que** le dispositif de transport (7) est configuré pour réaliser le mouvement d'avance de fraise.

10. La poste de traitement selon l'une des revendications 1 à 9, **caractérisée en ce que** le canal d'aspiration (14) sort du corps de base (8) pour évacuer la matière sur une face frontale (20) axiale du corps de base (8), en particulier par un arbre creux ou un axe creux s'étendant coaxialement à l'axe de rotation.

11. La poste de traitement selon l'une des revendications 1 à 10, **caractérisée en ce que** le support (5) comprend plusieurs surfaces de support (23) adaptées à la forme de l'interconnexion de cuisson (3) pour la mise en butée des pièces moulées de gaufrette (1) de l'interconnexion de cuisson (3).

12. La poste de traitement selon l'une des revendications 1 à 11, **caractérisée**
- **en ce que** le support (5) comprend plusieurs surfaces de support (23) adaptées à la forme de l'interconnexion de cuisson (3) pour la mise en butée des pièces moulées de gaufrette (1) de l'interconnexion de cuisson (3),
- **en ce que** des ouvertures d'aspiration (25) en contact avec une source de dépression (24) sont prévues pour maintenir les pièces moulées de gaufrette (1) de l'interconnexion de cuisson (3) sur le support (5),
- et **en ce que** les surfaces de support (23) sont réalisées pour maintenir les barrettes de liaison (2) espacées du support (5).

13. La poste de traitement selon l'une des revendications 1 à 12, **caractérisée en ce que** le support (5) est réalisé comme plaque d'aspiration.

14. La poste de traitement selon l'une des revendications 1 à 13, **caractérisée**
- **en ce que** plusieurs supports (5) sont prévus,
- **en ce que** le dispositif de transport (7) est réalisé comme transporteur sans fin,
- **en ce que** les supports (5) sont disposés en série le long du dispositif de transport (7),
- et **en ce que** les supports (5) sont déplacés ou peuvent être déplacés par le dispositif de transport (7) de manière continue à travers le dispositif de séparation (4),
- les supports (5) étant déplacés ou pouvant être déplacés par le dispositif de transport (7) successivement en particulier d'une zone de réception (26) pour recevoir les interconnexions de cuisson (3) à travers le dispositif de séparation (4) vers une zone de prélèvement (27) pour prélever les pièces moulées de gaufrette (1).
